# EUROPÄISCHE PATENTSCHRIFT

(11) **EP 1 446 604 B1**
(45) Veröffentlichungstag und Bekanntmachung des Hinweises auf die Patenterteilung: **31.08.2005**
(21) Anmeldenummer: 02785378.7
(22) Anmeldetag: 09.11.2002
(51) Int. Cl.: F16L 27/087, F16L 27/08

(54) **ANSCHLUSSBLOCK FÜR HYDRAULIK-VERSORGUNGSLEITUNGEN DER HYDROSTATIKANLAGE EINES ÖLFILMLAGERS**
CONNECTING BLOCK FOR THE HYDRAULIC SUPPLY LINES OF THE HYDROSTATIC UNIT OF AN OIL-FILM BEARING
BLOC DE RACCORDEMENT DESTINE A DES CONDUITES D'ALIMENTATION HYDRAULIQUES DE L'UNITE HYDROSTATIQUE D'UN PALIER A FILM D'HUILE

(30) Priorität: 23.11.2001 DE 10157318; 29.08.2002 DE 10239615
(43) Veröffentlichungstag der Anmeldung: 18.08.2004
(73) Patentinhaber: SMS Demag Aktiengesellschaft, 40237 Düsseldorf (DE)
(72) Erfinder: HÜCKER, Rolf, 57223 Kreuztal (DE); KELLER, Karl, 57271 Hilchenbach (DE)
(74) Vertreter: Valentin, Ekkehard
(86) Internationale Anmeldenummer: PCT/EP2002/012539
(87) Internationale Veröffentlichungsnummer: WO 2003/044415

(56) Entgegenhaltungen:
- EP-A- 0 955 123
- DE-A- 3 319 618
- DE-A- 3 725 222
- US-A- 4 790 699

## Beschreibung

Nach dem Oberbegriff des Anspruchs 1 betrifft die Erfindung ein Lagereinbaustück mit einem Anschlußblock für Hydraulik-Versorgungsleitungen der Hydrostatikanlage eines Ölfilmlagers der fest an dem Lagereinbaustück angeordnet ist, und mindestens einen Hydraulikschlauch haltert, welcher mit der im Lagereinbaustück beweglich angeordneten Lagerbuchse verbunden ist.

Derartige Anschlußblöcke weisen eine Schnellschlußkupplung auf, mittels derer z. B. beim Walzenwechsel ein möglichst schneller Anschluß des Lagereinbaustücks an eine Ölversorgung erfolgen kann. Am Anschlußblock ist weiterhin ein Hydraulikschlauch angeordnet, der das Hydrauliköl zur Lagerbuchse zu leiten vermag. Die Lagerbuchsen sind im Einbaustück beweglich gelagert, so daß die Hydraulikschläuche die Bewegung zwischen der Lagerbuchse und dem feststehenden Anschlußblock ausgleichen müssen. Dazu liegen die Schläuche offen am Lagereinbaustück an.

Dadurch besteht die Gefahr der Beschädigung der Schläuche einerseits durch Reibung derselben am Lagereinbaustück aber vor allem auch durch von außen versehentlich im rauhen Walzwerksbetrieb aufgebrachte Stöße beim Wechseln der Walzen, die bis zum Platzen der Schläuche führen können.

Der Erfindung liegt die Aufgabe zugrunde, einen Anschlußblock derart weiter zu bilden, daß die geschilderten Nachteile nicht mehr auftreten, und daß die Betriebssicherheit der Hydrostatikanlage erhöht ist.

Die Aufgabe wird durch die Merkmale des Anspruchs 1 gelöst. Das axial im Anschlußblock verschiebbare Anschlußrohr vermag die Bewegungen der Lagerbuchse auszugleichen. Dadurch kann der Anschlußblock mit sehr robusten Schläuchen bzw. festen Rohrleitungen mit der Lagerbuchse verbunden werden.

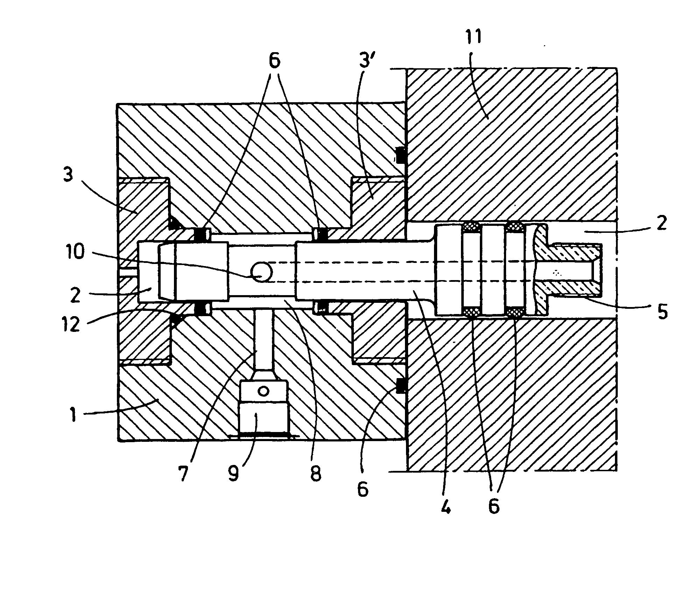

Die Erfindung wird anhand einer Zeichnung näher erläutert. Die Zeichnung zeigt einen Anschlußblock 1, der eine zentrale Bohrung 2 aufweist. In der zentralen Bohrung 2 sind Lager 3, 3' angeordnet, welche ein Anschlußrohr 4 halten. Das Anschlußrohr 4 ist einseitig geschlossen und weist am offenen Ende eine Kupplung 5 für eine nicht gezeigte Rohrleitung bzw. einen nicht gezeigten Schlauch auf. Dabei ist die Kupplung 5 sowie der mit der Kupplung 5 zu verbindende Anschluß des Schlauches am Anschlußrohr 4 im Lagereinbaustück 11 geschützt.

Das Anschlußrohr 4 ist in der zentralen Bohrung 2 bzw. den Lagern 3, 3' über Dichtungen 6 abgedichtet. Im Anschlußblock 1 ist eine radiale Bohrung 7 angeordnet, die in einem Ringkanal 8 endet. Am freien Ende der radialen Bohrung 7 ist eine Schnellschlußkupplung 9 angeordnet. Das Anschlußrohr 4 weist mindestens eine radiale Öffnung 10 auf, die den Ringkanal 8 mit dem inneren des Anschlußrohres 4 verbindet.

Über die Schnellschlußkupplung 9, die radiale Bohrung 7, den Ringkanal 8, die radiale Öffnung 10 sowie das Anschlußrohr 4 kann damit Hydraulikmittel zur Kupplung 5 des Anschlußrohres 4 geleitet werden. Kommt es zu Bewegungen der nicht gezeigten Lagerbuchse, so kann diese über die nicht gezeigte Rohrleitung bzw. den nicht gezeigten Schlauch auf das Anschlußrohr 4 übertragen werden, welches die Bewegung durch seine axiale Beweglichkeit im feststehenden Anschlußblock 1 auszugleichen vermag.

Der Anschlußblock 1 ist fest mit dem Lagereinbaustück 11 verschraubt, so daß dieser unempfindlich gegen Stöße ist. Durch eine weitere Dichtung 12 ist das Innere des hydraulischen Kreislaufes sowie des Lagereinbaustücks 11 gegen eindringendes Kühlwasser und Schmutz gesichert. Der Anschlußblock 1 kann in nicht rostender Ausführung hergestellt werden, so daß keine Korrosion durch Kühlwasser auftreten kann.

### Bezugszeichenliste

- 1: Anschlußblock
- 2: zentrale Bohrung
- 3: Lager
- 4: Anschlußrohr
- 5: Kupplung
- 6: Dichtung
- 7: radiale Bohrung
- 8: Ringkanal
- 9: Schnellschlußkupplung
- 10: radiale Öffnung
- 11: Lagereinbaustück
- 12: Dichtung

## Patentansprüche

1. Lagereinbaustück (11) mit in diesem beweglich angeordneter Lagerbuchse eines Ölfilmlagers, und mit fest am Lagereinbaustück (11) angeordnetem Anschlußblock (1) über welchen die Hydraulik-Versorgungsleitungen einer Hydrostatikanlage des Ölfilmlagers an mindestens einen mit der Lagerbuchse verbundenen Hydraulikschlauch anschließbar ist,
**dadurch gekennzeichnet,**
**daß** der Anschlußblock (1) eine zentrale Bohrung (2) aufweist, daß die zentrale Bohrung (2) mit Lagern (3, 3') ausgestattet ist, in denen ein Anschlußrohr (4) axial beweglich gelagert ist, daß der Anschlußblock (1) mindestens eine radial zur zentralen Bohrung (2) angeordnete zweite Bohrung (7) aufweist, deren offenes Ende mit einer Kupplung (9) für einen Anschlußschlauch versehen ist, daß die radiale Bohrung (7) in einem das Anschlußrohr (4) umgebenden Ringkanal (8) endet, daß das Anschlußrohr (4) im Bereich des Ringkanals (8) zumindest eine radial gerichtete Öffnung (10) aufweist, daß ein Ende des Anschlußrohrs (4) verschlossen ist und daß am freien Ende des Anschlußrohrs eine Kupplung (5) für einen zur Lagerbuchse führenden Anschlußschlauch vorgesehen ist.

2. Lagereinbaustück (11) nach Anspruch 1,
**dadurch gekennzeichnet,**
**daß** zwischen dem Anschlußrohr (4) und der zentralen Bohrung (2) Dichtungen (6) vorgesehen sind.

3. Lagereinbaustück (11) nach Anspruch 2,
**dadurch gekennzeichnet,**
**daß** die Dichtungen (6) auf dem Anschlußrohr (4) sitzen und dieses gegen die zentrale Bohrung (2) abdichten sowie die axiale Bewegung des Anschlußrohrs (4) in den Lagern (3, 3') zulassen.

4. Lagereinbaustück (11) nach einem der Ansprüche 1 bis 3,
**dadurch gekennzeichnet,**
**daß** die am freien Ende des Anschlußrohrs (4) vorgesehene Kupplung (5) im Lagereinbaustück (11) vorgesehen, und von diesem gegen mechanische Beanspruchungen schützend umgeben ist.

5. Lagereinbaustück (11) nach einem der Ansprüche 1 bis 4,
**dadurch gekennzeichnet,**
**daß** der Anschlußblock (1) mit dem Lagereinbaustück (11) verschraubt ist.

6. Lagereinbaustück (11) nach einem der Ansprüche 2 bis 5,
**dadurch gekennzeichnet,**
**daß** die zentrale Bohrung (2) zusätzlich zu den Dichtungen (6) durch eine weitere Dichtung (12) gegen eindringendes Kühlwasser und eindringenden Schmutz gesichert ist.

7. Lagereinbaustück (11) nach einem der Ansprüche 1 bis 6,
**dadurch gekennzeichnet,**
**daß** der Anschlußblock (1) in jeder beliebigen Stellung am Lagereinbaustück (11) montierbar ist, so daß die am offenen Ende der zweiten Bohrung (7) vorgesehene Schnellschlußkupplung (9) eine für die Handhabung optimale Winkellage einnimmt.

## Claims

1. Bearing chock (11) with bearing bush, which is movably arranged therein, of an oil film bearing, and connecting block (1), which is fixedly arranged at the bearing chock (11), by way of which the hydraulic supply lines of a hydrostatic installation of the oil film bearing is connectible with at least one hydraulic hose connected with the bearing bush, **characterised in that** the bearing block (1) has a central bore (2), that the central bore (2) is equipped with bearings (3, 3') in which a connecting pipe (4) is mounted to be axially movable, that the bearing block (1) has at least one second bore (7), which is arranged radially with respect to the central bore (2) and the open end of which is provided with a coupling (9) for a connecting hose, that the radial bore (7) ends in an annular channel (8) surrounding the connecting pipe (4), that the connecting pipe (4) has at least one radially oriented opening (10) in the region of the annular channel (8), that an end of the connecting pipe (4) is closed and that a coupling (5) for a connecting hose leading to the bearing bush is provided at the free end of the connecting pipe.

2. Bearing chock (11) according to claim 1, **characterised in that** seals (6) are provided between the connecting pipe (4) and the central bore (2).

3. Bearing chock (11) according to claim 2, **characterised in that** the seals (6) are seated on the connecting pipe (4) and seal this relative to the central bore (2) as well as allow axial movement of the connecting pipe (4) in the bearings (3, 3').

4. Bearing chock (11) according to one of claims 1 to 3, **characterised in that** the coupling (5) provided at the free end of the connecting pipe (4) is provided in the bearing chock (11) and is surrounded by this to be protected from mechanical loads.

5. Bearing chock (11) according to one of claims 1 to 4, **characterised in that** the connecting block (1) is screw-connected with the bearing chock (11).

6. Bearing chock (11) according to one of claims 2 to 5, **characterised in that** the central bore (2) is secured additionally to the seals (6) by a further seal (12) against penetrating cooling water and penetrating dirt.

7. Bearing chock (11) according to one of claims 1 to 6, **characterised in that** the connecting block (1) can be mounted at the bearing chock (11) in any desired setting so that the quick-action coupling (9) provided at the open end of the second bore (7) adopts an angular position optimal for handling.

## Revendications

1. Empoise (11) de palier avec un coussinet d'un palier à film d'huile disposé de manière mobile dans ladite empoise et avec un bloc de raccordement (1) disposé de manière immobile sur l'empoise (11) de palier, via lequel les conduites d'alimentation hydrauliques d'une installation hydrostatique du palier à film d'huile peuvent être raccordées à au moins un flexible hydraulique raccordé au coussinet, **caractérisée en ce que** le bloc de raccordement (1) présente un trou central (2), **en ce que** le trou central (2) est équipé de paliers (3, 3') dans lesquels un tuyau de raccordement (4) est logé de manière axialement mobile, **en ce que** le bloc de raccordement (1) présente au moins un deuxième trou (7) disposé radialement par rapport au trou central (2), dont l'extrémité ouverte est pourvue d'un accouplement (9) pour un flexible de raccordement, **en ce que** le trou radial (7) débouche dans un canal annulaire (8) entourant le tuyau de raccordement (4), **en ce que** le tuyau de raccordement (4) présente, dans la zone du canal annulaire (8), au moins une ouverture (10) orientée radialement, **en ce qu'**une extrémité du tuyau de raccordement (4) est fermée et **en ce qu'**on a prévu en l'extrémité libre du tuyau de raccordement un accouplement (5) pour un flexible de raccordement allant vers le coussinet.

2. Empoise (11) de palier selon la revendication 1, **caractérisée en ce qu'**on a prévu des joints (6) entre le tuyau de raccordement (4) et le trou central (2).

3. Empoise (11) de palier selon la revendication 2, **caractérisée en ce que** les joints (6) sont placés sur le tuyau de raccordement (4) et rendent celui-ci étanche par rapport au trou central (2) tout en autorisant le mouvement axial du tuyau de raccordement (4) dans les paliers (3, 3').

4. Empoise (11) de palier selon l'une quelconque des revendications 1 à 3, **caractérisée en ce que** l'accouplement (5) prévu en l'extrémité libre du tuyau de raccordement (4) est prévu dans l'empoise (11) de palier et est entouré par celle-ci de manière à le protéger contre les sollicitations mécaniques.

5. Empoise (11) de palier selon l'une quelconque des revendications 1 à 4, **caractérisée en ce que** le bloc de raccordement (1) est fixé par vissage avec l'empoise (11) de palier.

6. Empoise (11) de palier selon l'une quelconque des revendications 2 à 5, **caractérisée en ce que** le trou central (2) est assuré contre une pénétration de l'eau de refroidissement et de saletés par les joints (6), ainsi qu'en plus par un autre joint (12).

7. Empoise (11) de palier selon l'une quelconque des revendications 1 à 6, **caractérisée en ce que** le bloc de raccordement (1) peut être monté dans une position quelconque sur l'empoise de palier (11) de telle manière que l'accouplement à fermeture rapide (9) prévu sur l'extrémité ouverte du deuxième trou (7) prend une position angulaire optimale pour la manipulation.
